(19) Europäisches Patentamt
European Patent Office
Office européen des brevets

(11) Veröffentlichungsnummer : **0 332 015 B1**

(12) **EUROPÄISCHE PATENTSCHRIFT**

(45) Veröffentlichungstag der Patentschrift : **11.09.91 Patentblatt 91/37**

(51) Int. Cl.$^5$ : **C09J 201/00**

(21) Anmeldenummer : **89103448.0**

(22) Anmeldetag : **28.02.89**

# (54) Klebstoff.

(30) Priorität : **05.03.88 DE 3807238**

(43) Veröffentlichungstag der Anmeldung : **13.09.89 Patentblatt 89/37**

(45) Bekanntmachung des Hinweises auf die Patenterteilung : **11.09.91 Patentblatt 91/37**

(84) Benannte Vertragsstaaten : **AT BE CH DE ES FR GB IT LI NL SE**

(56) Entgegenhaltungen :
**EP-A- 0 061 822**
**EP-A- 0 237 960**

(73) Patentinhaber : **BASF Aktiengesellschaft
Carl-Bosch-Strasse 38
W-6700 Ludwigshafen (DE)**

(72) Erfinder : **Aydin, Oral, Dr.
Sophienstrasse 14
W-6800 Mannheim 1 (DE)**
Erfinder : **Rockstroh, Hermann
Weisenheimer Strasse 28
W-6701 Maxdorf (DE)**
Erfinder : **Goertz, Hans-Helmut, Dr.
Am Wurmberg 11
W-6713 Freinsheim (DE)**

**EP 0 332 015 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Klebstoffe auf der Basis von Polymerdispersionen mit verbesserten Eigenschaften.

Bei der Herstellung von Klebstoffen, basierend auf Polymerdispersionen, werden die Dispersionen mit viskositätsregelnden Zusätzen formuliert, um eine gute, an die jeweilige Anwendung angepaßte Verarbeitbarkeit zu erhalten.

Wird z.B. ein Klebstoff auf Basis von Polymerdispersionen auf saugende Untergründe wie Papier, Textil, Schaumstoffe, Beton, Ziegel aufgebracht, so sollte diese Formulierung leicht fließend verarbeitbar, auf der anderen Seite so viskos sein, daß die Klebstoffschicht an der Oberfläche fixiert wird, damit der Klebstoff nicht durch die porösen Materialien durchschlägt, sondern für die Verklebung zur Verfügung steht.

Bei den Kaschier-, Verpackungsklebstoffen und Holzleimen auf Dispersionsbasis werden Klebstoff-Formulierungen verwendet, die neben den guten Endeigenschaften der Verklebungen eine relativ hohe Viskosität mit gutem Fließen (fast Newton'sche Flüssigkeiten) aufweisen. Dadurch wird zum Beispiel Spritzen bei den schnellaufenden Verpackungsmaschinen verhindert sowie ein gutes Naßanzugsvermögen erhalten.

Bei der maschinellen Verarbeitung solcher Klebstoff-Formulierungen, z.B. bei Möbelfolienkaschierung (Polyvinylchlorid-Folie gegen Spanplatten) hat man Förderprobleme, wenn die Formulierungen Fließgrenzen aufweisen.

Es ist bekannt, daß Polymerdispersionen durch verschiedene natürliche und synthetische Verdickungsmittel auf Basis von organischen sowie anorganischen Materialien verdickt werden können, z.B. durch Cellulose, Cellulosederivate, Kasein, Kaseinborax-Mischungen, Bentonite, feinteilige Kieselsäuren, hochmolekulare wasserlösliche synthetische Produkte wie Poly(acryl)säuresalze, wasserlösliche Homo- und Copolymere des Vinylpyrrolidons und andere wasserlösliche hochpolymere Verbindungen.

Alle diese Verdickungsmittel führen zu einer mehr oder weniger stark ausgeprägten Strukturviskosität der Formulierungen, und viele, vor allem solche auf Basis polymerer Polysäure-Salze, sind in sauren pH-Bereichen wirkungslos.

Aufgabe der vorliegenden Erfindung ist daher, die für Klebstoffe eingesetzten Dispersionen rheologisch so zu modifizieren, daß deren Verarbeitbarkeit dem jeweiligen Anwendungsbereich leicht angepaßt werden kann.

Es wurde gefunden, daß Polymerdispersionen für Klebstoff-Formulierungen sich durch Zusatz von Verbindungen der allgemeinen Formel I

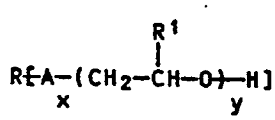

I,

wobei

R = über Sauerstoff gebundener Rest eines 2 bis 6-wertigen Alkohols mit 2 bis 10 C-Atomen,

$R^1$ = Alkyl-, Alkoxymethyl- oder Alkenyloxymethyl-Rest oder eine Mischung dieser Reste, mit jeweils 6 bis 18 C-Atomen im Alkyl-, Alkoxy- bzw. Alkenyloxy-Rest,

A = $-CH_2CH_2$-O— (= EO) allein oder in Mischung mit

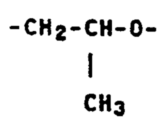

(=PO)

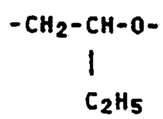

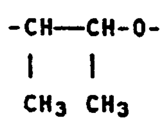

oder

$-CH_2CH_2CH_2CH_2$-O—,

wobei A zu mindestens 50, vorzugsweise mindestens 70 Mol% $—CH_2CH_2O—$ bedeutet,
x = 12 bis 500,
y = ein Durchschnittswert (gemittelt über zahlreiche Moleküle) von 0,3 bis 5
n = eine ganze Zahl von 2 bis 6,
als Verdicker so modifizieren lassen, daß deren Verarbeitung auf den verschiedenen Gebieten der Klebstoffe vorteilhaft beeinflußt wird.

Derartige Verbindungen wurden bereits als Verdicker für hydraulische Flüssigkeiten auf wäßriger Basis (US 4411819, 4649224, 4665239, WO 64/00361) sowie für wäßrige Quenchflüssigkeiten (US 4381205) zum Abschrecken heißer Metalle vorgeschlagen. Ihre hervorragende Eignung als Verdicker für Klebstoffe war dadurch jedoch nicht nahegelegt.

Die erfindungsgemäß eingesetzten Verdicker sind Polyetherpolyole, die aus einem linearen oder verzweigten Niedrigalkylenoxid-Homo- oder -Copolymeren bestehen, das endständig mit 1,2-Alkylenoxiden mit 8 bis 20 Kohlenstoffatomen oder Alkyl- bzw. Alkenylglycidylethern mit 6 bis 18 Kohlenstoffatomen in der Alkyl- bzw. Alkenylkette umgesetzt ist. Das mittlere Molekulargewicht liegt im Bereich von 1000 bis 75000.

Solche Polyetherpolyole werden erhalten, indem man, wie in EP 61822 und EP 116564 beschrieben, einen mehrwertigen Alkohol (mit 2 bis 6 Hydroxylgruppen), enthaltend 2 bis 10 Kohlenstoffatome, mit Ethylenoxid alleine oder mit Ethylenoxid und einem oder mehreren Alkylenoxiden mit 3 oder 4 Kohlenstoffatomen umsetzt (wobei im letzteren Fall die Umsetzung im Gemisch erfolgt, wenn ein statistisches Copolymeres gewünscht ist, und sukzessiv erfolgt, wenn ein Blockcopolymeres gewünscht ist) und anschließend diese Zwischenstufe mit mindestens 0,3 Äquivalent (pro Hydroxylgruppe) Alkylenoxid mit 8 bis 20 Kohlenstoffatomen und endständiger Epoxidgruppe oder mit 0,3 Äquivalent Alkyl- oder Alkenylglycidylether mit 6 bis 18 Kohlenstoffatomen im Alkyl bzw. Alkenylrest umsetzt. Die Herstellung kann auch, wie in US 4398045 beschrieben, durch Umsetzung eines bereits vorliegenden Polyalkylenoxidhomo- oder copolymeren, das aus $C_2$- bzw. $C_2$ und $C_3/C_4$-Epoxiden aufgebaut ist, mit den o.g. längerkettigen Alkylenoxiden bzw. Glycidylethern erhalten werden.

Mit 2 bis 6-wertigen Alkoholen sind solche gemeint, die 2 bis 6 Hydroxylgruppen besitzen. Es handelt sich im einzelnen um Alkanpolyole, Alkenpolyole, Alkinpolyole oder Oligooxyalkylenglykole, jeweils mit 2 bis 10, vorzugsweise 2 bis 6 Kohlenstoffatomen.

Beispiele für geeignete Alkanpolyole sind Ethylenglykol, 1,2- und 1,3-Propylenglykol, Neopentylglykol, 1,2-Butandiol, 1,3-Butandiol, 1,4-Butandiol, Trimethylolpropan, Glycerin, Pentaerythrit, 2,3,4,5-Hexantetrol, Sorbit, Glucose.

Beispiele für Alkenpolyole sind 2-Buten-1,4-diol, 2-Hexen-1,4,6-triol, 1,5-Hexadien-3,4-diol, 3-Hepten-1,2,6,7-tetrol.

Beispiele für Alkinpolyole sind 2-Butin-1,4-diol, 2-Hexin-1,4,6-triol, 4-Octin-1,2,7,8-tetrol.

Beispiele für Oligooxyalkylenglykole sind Diethylenglykol, Triethylenglykol, Tetraethylenglykol, Dipropylenglykol.

Das Grundgerüst des Polyetherpolyols kann entweder nur aus Oxyethyleneinheiten aufgebaut sein oder daneben auch Oxyalkyleneinheiten mit 3 bis 4 Kohlenstoffatomen in einer Menge bis zu 50, vorzugsweise bis zu 30 Mol% enthalten. Entsprechende Alkylenoxide sind insbesondere Propylenoxid, aber auch 1,2-Butylenoxid, 2,3-Butylenoxid, ferner auch Tetrahydrofuran. Die entsprechenden Copolymeren können statistische oder Blockcopolymere sein. Unter den Copolymeren besonders bevorzugt sind solche, die Ethylenoxid und Propylenoxid im Gewichtsverhältnis 70 : 30 bis 95 : 5 enthalten.

Die Herstellung der am Kettende eingebauten längerkettigen Epoxide bzw. Glycidylether mit 8 bis 20 bzw. 9 bis 21 Kohlenstoffatomen erfolgt in üblicher Weise durch α-Olefinoxidation bzw. durch Umsetzung von Fettalkoholen mit Epichlorhydrin.

Die Menge an längerkettigem 1,2-Alkylenoxid bzw. Glycidylether liegt im allgemeinen zwischen 0,5 und 75 Gew.%, bezogen auf das Gesamtmolekül. Das durchschnittliche molare Verhältnis von längerkettigem Epoxid bzw. Glycidylether zu jeder einzelnen Hydroxygruppe des mehrfunktionellen Alkohols soll im Bereich von 0,3 bis 5, vorzugsweise zwischen 0,5 und 2 liegen.

Beispiele für langkettige 1,2-Epoxide sind 1,2-Epoxyoctan, 1,2-Epoxydodekan, 1,2-Epoxyhexadekan wie auch Mischungen solcher Epoxide, die käuflich erhältlich sind.

Beispiele für Alkylglycidylether sind Octyl-, Decyl-, Dodecyl-, Tetradecyl-, Hexadecyl-, 2-Methyldodecyl- und 2-Hexyldodecylglycidylether.

Als Verdickungsmittel werden Polyetherpolyole vom Molgewicht 1000 bis 75000 bevorzugt, die man durch Umsetzung eines bi- oder trifunktionellen Alkohols mit Ethlyenoxid, ggf. im Gemisch mit bis zu 30 Gew.% Propylenoxid, und anschließende weitere Umsetzung mit mindestens einem 1,2-Alkylenoxid mit 8 bis 18 Kohlenstoffatomen oder mindestens einem Alkyl- oder Alkenylglycidylether mit 8 bis 18 Kohlenstoffatomen in der Alkyl- bzw. Alkenylgruppe in einer Menge von 2 bis 5 Mol pro Mol bi- oder trifunktioneller Alkohol erhält.

Die Polymerisate der Polymer-Dispersion können die für Klebstoffe übliche Zusammensetzung aufweisen und sich z.B. von Acryl- und/oder Methacrylsäureestern geradkettiger oder verzweigter Alkanole, die meist 1 bis 10, insbesondere 4 bis 8 C-Atome aufweisen, von vinylaromatischen Monomeren, wie Styrol ; von Vinylestern 2 bis 10, insbesondere 2 bis 4 C-Atome enthaltender Carbonsäuren, Vinyl- und/oder Vinylidenhalogeniden und/oder 1,3-Diolefinen, vorzugsweise Butadien, ableiten. Von besonderem Interesse sind Polymer-Dispersionen mit Klebstoffeigenschaften. Besonders geeignet sind daher Polymer-Dispersionen, deren Polymerisate sich aus n-Butyl-, Isobutyl- und 2-Ethylhexylacrylat, Vinylacetat, Vinylpropionat und Vinyllaurat, gegebenenfalls untereinander gemischt und/oder im Gemisch mit z.B. Ethylen, Styrol und Butadien, aufbauen. Der Feststoffgehalt der Polymer-Dispersionen liegt im allgemeinen im Bereich von 35 bis 70, insbesondere von 40 bis 60 Gew.% Polymerisat.

Neben der Polymerdispersion als Bindemittel und dem Verdicker sind als weitere Bestandteile (Zusatzstoffe) beispielsweise üblich : anorganische, wasserunlösliche Pulver sowie organische Harze als Füllstoffe, Weichmacher, Dispergierhilfsmittel, Stabilisatoren.

Die erfindungsgemäßen Verdicker können im Gegensatz zu vielen üblichen im gesamten pH-Bereich von 1 bis 10 eingesetzt werden, da ihr Effekt sehr wenig vom pH-Wert abhängt. Sie können aus Wasser oder wäßrigen Mischungen von mit Wasser mischbaren Lösungsmitteln wie Alkoholen, Glykolen und aus üblichen Lösungsmitteln, in denen die Verdicker löslich sind, wie Estern, Ketonen, Kohlenwasserstoffen, Weichmachern, flüssigen Harzen oder aus flüssigen nichtionischen Tensiden wie Fettalkoholalkoxylaten, Alkylphenolalkoxylaten, Fettsäurealkoxylaten verarbeitet werden. Wegen der sehr starken Verdickungseffekte ist es vorteilhaft, mit etwa 10%igen Verdickerlösungen zu arbeiten.

Der Anteil des Verdickers der Formel I (100% Festgehalt) an der gesamten Formulierung liegt zwischen 0,02 und 2 Gew.%, vorzugsweise zwischen 0,05 und 1,0 Gew.%. Bei Kombination mit anderen Verdickungsmitteln, z.B. Hydroxyethylcellulose, können diese Mengen deutlich unterschritten werden. Die Verdicker werden vorzugsweise als Lösung in Wasser oder einer Kombination aus Wasser und wenigstens teilweise wassermischbaren organischen Lösemitteln eingesetzt.

Die in den Formulierungen und Beispielen angegebenen Teile und Verhältnisse beziehen sich auf das Gewicht.

| Zusammensetzung der Verdicker der Formel I: | | Zubereitung |
|---|---|---|
| V1: | R = 1,1,1-Trimethylolpropan-Rest, über O gebunden, | |
| | A = EO und PO im Molverhältnis 87:13 | 10 %ige Lösung in Wasser |
| | $R^1$ = $C_{13-16}$-Alkyl | |
| | x = 130 | |
| | y = 0,75 | |
| | n = 3 | |
| V2: | R = 1,1,1-Trimethylolpropan-Rest, über O gebunden, | |
| | A = EO und PO im Molverhältnis 87:13 | 25 %ig in Butyldiglykol/$H_2O$ 1:4 |
| | $R^1$ = $C_{14}$-Alkyl | |
| | x = 130 | |
| | y = 1 | |
| | n = 3 | |

V3: R = 1,1,1-Trimethylolpropan-Rest, über O gebunden,
A = EO und PO im Molverhältnis 3:1
$R^1$ = $C_{18}$-Alkyl
x = 120
y = 2
n = 3

50 %ige Lösung in Isopropanol

V4: R = $-O-CH_2-CH_2-O-$
A = 100 % EO
$R^1$ = $C_{18}$-Alkyl
x = 150
y = 2
n = 2

10 %ige Lösung in Wasser

V5: R = $-O-CH_2-CH_2-O-$
A = 100 % EO
$R^1$ = $C_{16}$-Alkyl
x = 150
y = 4
n = 2

10 %ige Lösung in Wasser

V6: R = 1,1,1-Trimethylolpropan-Rest, über O gebunden,
A = 100 % EO
$R^1$ = $C_{10}$-Alkyl
x = 127
y = 1
n = 3

25 %ige Lösung in Butyldiglykol/Wasser 1:1

EO = Ethylenoxid
PO = Propylenoxid

Polymerdispersionen

PD 1: Eine handelsübliche 50%ige wäßrige Dispersion eines thermisch vernetzbaren Copolymerisats aus Acrylsäurebutylestern und Acrylnitril. Sie wird zum Herstellen von Klebstoffen für Beflocken und Kaschieren verwendet.
Viskosität bei 25°C : 25 mPas
(Contraves Rheometer STV, A III)
pH-Wert : 3,2
Glastemperatur des Films : –36°C

PD 2: Eine handelsübliche 60%ige wäßrige Dispersion eines Copolymerisates aus Acrylsäureestern und Acrylsäure. Sie wird zum Herstellen von Klebstoffen für das Kleben von Bodenbelägen verwendet.
Viskosität bei 25°C : 120 mPas
(Contraves Rheometer STV, A III)
pH-Wert : 5,2
Glastemperatur des Films : –20°C

PD 3: Eine handelsübliche 50%ige wäßrige Dispersion eines thermisch vernetzbaren Copolymerisats aus

Vinylacetat und einem Acrylsäurebutylester.
Viskosität bei 25°C : 90 mPas
(Contraves Rheometer STV, B III)
pH-Wert : 5,0
Glastemperatur des Films : +19°C

PD 4 : Eine handelsübliche 55%ige wäßrige Dispersion eines Vinylester-Acrylester-Copolymerisats. Sie wird für das Verkleben von textilen Bodenbelägen verwendet.
Viskosität bei 25°C : 1000 mPas
(Contraves Rheometer STV, B III)
pH-Wert : 6,0
Glastemperatur des Films : +6°C

PD 5 : Eine handelsübliche 55%ige wäßrige Dispersion eines Copolymerisats aus Vinylchlorid, Acrylester und Acrylnitril. Sie wird als Schutzbeschichtungsdispersion im Verpackungssektor verwendet.
Viskosität bei 25°C : 15 mPas
(Contraves Rheometer STV, B III)
pH-Wert : 1,8
Glastemperatur des Films : –13°C

PD 6 : Eine handelsübliche 50%ige wäßrige Dispersion eines carboxylgruppenhaltigen Copolymerisats aus Vinylacetat und Butylacrylat. Sie wird zum Herstellen von Klebstoffen für die Papier- und Folienverarbeitung sowie als Beschichtungsmittel für textile Substrate verwendet.
Viskosität bei 25°C : 22 mPas
(Contraves Rheometer STV, B III)
pH-Wert : 4,1
Glastemperatur des Films : –13°C

PD 7 : Eine handelsübliche 50%ige wäßrige Dispersion eines Copolymerisats aus Acrylsäure, Styrol und Butylacrylat mit Zinktetramminacetat-Komplex.
Viskosität bei 25°C : 90 mPas
(Contraves Rheometer STV, B III)
pH-Wert : 9,0
Glastemperatur des Films : +23°C

PD 8 : Eine handelsübliche 60%ige wäßrige Dispersion eines carboxylgruppenhaltigen Acrylester-Copolymerisats. Sie wird zum Herstellen von Haftklebstoffen für selbstklebende Erzeugnisse verwendet.
Viskosität bei 25°C : 110 mPas
(Contraves Rheometer STV, B III)
pH-Wert : 4,0
Glastemperatur des Films : –40°C

Beispiele

Die oben beschriebenen Polymerdispersionen wurden mit den erfindungsgemäßen, oben beschriebenen Verdickern abgemischt, wobei gut fließende, hochviskose Mischungen erhalten wurden. Die Daten der Abmischungen sind in Tabelle 1 zusammengestellt.

Tabelle 1

Viskosität bei 23°C bei einer Schergeschwindigkeit von 5,6 $s^{-1}$ nach DIN 53019 im Haake-Viskosimeter Rotovisco RV 12 ermittelt.

| Beispiel Nr. | Dispersion jeweils 100 Teile | Verdicker Zubereitung [Teile] | | Viskosität [mPas] | pH-Wert |
|---|---|---|---|---|---|
| 1 | PD 1 | 1,0 | V 3 | 11 250 | 3,2 |
| 2 | PD 1 | 15 | V 4 | 3 800 | 3,2 |
| 3 | PD 1 | 45 | V 5 | 9 600 | 3,2 |
| 4 | PD 1 | 1,2 | V 6 | 5 680 | 3,2 |
| 5 | PD 1 | 1,4 | V 1 | 6 400 | 3,2 |
| 6 | PD 2 | 20* | V 2 | 12 400 | 5,2 |
| 7 | PD 3 | 31* | V 2 | 6 900 | 5,0 |
| 8 | PD 4 | 8* | V 2 | 33 200 | 6,0 |
| 9 | PD 5 | 12* | V 2 | 10 200 | 1,8 |
| 10 | PD 6 | 10* | V 2 | 5 800 | 4,1 |
| 11 | PD 7 | 10* | V 2 | 15 800 | 9,0 |
| 12 | PD 8 | 2 | V 2 | 21 300 | 4,0 |

* Verdicker-Lösung V 2 wurde mit Wasser auf 10 % Wirksubstanz verdünnt.

Beispiel 13

Verdickung für Verpackungskleber, Haftungsprüfung

Die in Beispiel 10 aufgeführte Mischung aus Polymerdispersion PD 6 und V 2 wurde mit einer Spiralrakel auf Papier-Etiketten in einer Schichtdicke (naß) von 20 µm aufgetragen und die Etiketten mit der beschichteten Seite auf verschiedene Oberflächen aufgebracht. Die Verklebungsfestigkeiten wurden nach dem Trocknen bewertet.

| Oberfläche | Probe aus Beispiel 10 PD 6 + V 2 | nicht verdickte Dispersion PD 6 |
|---|---|---|
| Polystyrol | 1 | 1-2 |
| Hart-PVC-Folie | 1 | 1 |
| Polyamid | 1 | 1 |
| Glas | 1 | 1 |
| Acetat-Folie | 1-2 | 1 |
| Alu-Folie | 1-2 | 1-2 |
| Polyester-Folie | 1 | 1 |
| UV-lackierte Pappe | 2 | 2 |
| Polypropylen-Folie* | 1 | 1 |
| Polyethylen-Folie* | 1 | 1 |

* mit Corona vorbehandelt.

Benotung: 1 vollflächiger Papierausriß; 2 sehr gute Haftung;
3 ausreichende Haftung; 4 keine Haftung

Durch Zusatz des erfindungsgemäßen Verdickers wurde eine für diese Anwendung notwendige hohe Viskosität mit fast Newtonschem Fließen erhalten, ohne daß eine Haftungsverschlechterung eintrat.

Beispiel 14

Die verdickten Dispersionen mit hoher Viskosität und gutem Fließen wurden nach DIN 68603 als Holzleim geprüft.

a) 100 Teile PD 7
2 Teile V 2

b) 100 Teile PD 7
2 Teile V 6

c) 100 Teile PD 7
3 Teile V 1*

* jedoch als 25 %ige Lösung in Wasser/Butyldiglykol (1:1)

Die Kleber wurden mit Pinsel auf Buchenholz aufgetragen und sofort verklebt. Die Verklebungsfläche betrug 4 cm². Diese Fläche wurde bei der Verklebung mit 300 g belastet.
Die Verklebungsfestigkeiten wurden aus fünf Einzelwerten nach DIN 68603-B 1/1 ermittelt.

| Probe | Verklebungsfestigkeit $N/mm^2$ |
|---|---|
| 14 a | 6,9 |
| 14 b | 8,9** |
| 14 c | 8,9** |

** teilweise Materialbruch

## Patentansprüche

1. Klebstoff auf Basis einer Polymerdispersion, der neben der Dispersion als Bindemittel übliche Zusatzstoffe enthält, dadurch gekennzeichnet, daß er mit einer Verbindung der allgemeinen Formel I verdickt ist:

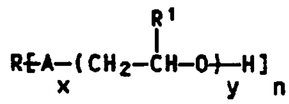 I.

wobei

R = über Sauerstoff gebundener Rest eines 2 bis 6-wertigen Alkohols mit 2 bis 10 C-Atomen,

$R^1$ = Alkyl-, Alkoxymethyl- oder Alkenyloxymethyl-Rest oder eine Mischung dieser Reste, mit jeweils 6 bis 18 C-Atomen im Alkyl-, Alkoxy- bzw. Alkenyloxy-Rest,

A = $—CH_2CH_2\text{-}O—$ allein oder in Mischung mit

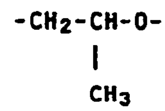

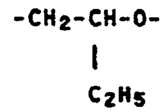

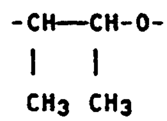 oder

$—CH_2CH_2CH_2CH_2\text{-}O—$,

wobei A zu mindestens 50 Mol% $—CH_2CH_2O—$ bedeutet,

x = eine Zahl von 12 bis 500,

y = ein Durchschnittswert von 0,3 bis 5,

n = eine ganze Zahl von 2 bis 6.

2. Klebstoff nach Anspruch 1, dadurch gekennzeichnet, daß er, bezogen auf die Gesamtmasse, 0,01 bis 5 Gew.% mindestens einer Verbindung der Formel I enthält.

## Claims

1. An adhesive based on a polymer dispersion which, in addition to the dispersion as a binder, contains conventional additives, wherein the said adhesive is thickened with a compound of the formula I

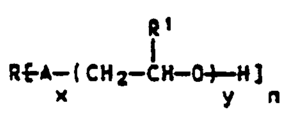 I

where

R is a radical of a dihydric to hexahydric alcohol of 2 to 10 carbon atoms, bonded via oxygen,

$R^1$ is alkyl, alkoxymethyl or alkenyloxymethyl where alkyl, alkoxy or alkenyloxy is of 6 to 18 carbon atoms, or a mixture of these radicals,

A is $—CH_2CH_2\text{-}O—$ alone or as a mixture with

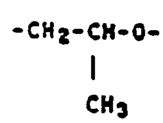

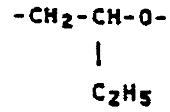

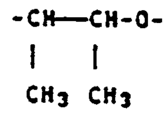

or

$—CH_2CH_2CH_2CH_2\text{-}O—$,

A consisting of not less than 50 mol% of $—CH_2CH_2O—$,
x is from 12 to 500,
y has a mean value of from 0.3 to 5 and
n is an integer from 2 to 6.

2. An adhesive as claimed in claim 1, which contains from 0.01 to 5% by weight, based on the total mass, of one or more compounds of the formula I.

## Revendications

1. Colle à base d'une dispersion de polymère, qui contient, en plus de la dispersion, des additifs habituels à titre de liants, caractérisée en ce qu'elle est épaissie avec un composé de la formule I :

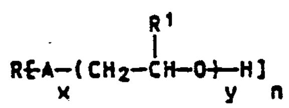

I

dans laquelle
R est un radical d'un alcool bi- à hexahydroxylé, comportant de 2 à 10 atomes de carbone, lié par l'intermédiaire d'oxygène,
$R^1$ est un radical alkyle, alcoxyméthyle ou alcényloxyméthyle, ou un mélange de ces radicaux, dont le groupe alkyle, alcoxy ou alcényloxy comporte chaque fois de 6 à 18 atomes de carbone,
A est un radical $—CH_2CH_2—$, seul ou en mélange à

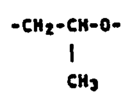

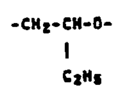

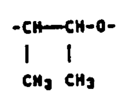

$—CH_2CH_2CH_2CH_2—$

où A représente au moins 50% molaires de $—CH_2CH_2—$,
x représente un nombre de 12 à 500,
y possède une valeur moyenne de 0,3 à 5,
n représente un nombre entier de 2 à 6.

2. Colle suivant la revendication 1, caractérisée en ce qu'elle contient de 0,01 à 5% en poids d'au moins un composé de la formule I, par rapport à la masse totale.